# EUROPEAN PATENT APPLICATION

(11) **EP 4 084 517 A1**
(43) Date of publication of application: **02.11.2022**
(21) Application number: 19957801.4
(22) Date of filing: 26.12.2019
(51) Int. Cl.: H04W 8/22, H04W 88/04, H04W 52/02

(54) **TERMINAL AND WIRELESS COMMUNICATION METHOD**

(71) Applicant: NTT DOCOMO, INC., Chiyoda-ku Tokyo 100-6150 (JP)
(72) Inventor: KUMAGAI, Shinya, Tokyo 100-6150 (JP); YOSHIOKA, Shohei, Tokyo 100-6150 (JP); NAGATA, Satoshi, Tokyo 100-6150 (JP)
(74) Representative: Hoffmann Eitle
(86) International application number: PCT/JP2019/051226
(87) International publication number: WO 2021/130984

(57) **Abstract**

A terminal according to an aspect of the present disclosure includes: a transmission section that transmits a report regarding a specific function among functions of a base station; and a control section that determines whether to execute the specific function or not on the basis of whether an instruction signal is received or not.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing high speed data rates, providing lower delays, and so on (see Non Patent Literature 1). In addition, the specifications of LTE-Advanced (third generation partnership project (3GPP) Release (Rel) 10 to 14) have been drafted for the purpose of further increasing capacity and advancement of LTE (3GPP Rel. 8 and 9).

Successor systems of LTE (for example, 5th generation mobile communication system (5G), 5G + (plus), New Radio (NR), New radio access (NX), Future generation radio access (FX), 3GPP Rel. 15 or later versions) are also under study.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

Future radio communication systems (e.g., 5G or NR) are expected to involve a plurality of types of communication (also referred to as use cases, services, communication types, and the like) under different requirements (requirements, communication requirements) examples of which include: higher speed and larger capacity (eMBB: enhanced Mobile Broad Band, for example), a massive amount of terminals (mMTC: massive Machine Type Communication, for example), and ultrahigh reliability and low latency (URLLC: Ultra Reliable and Low Latency Communications, for example). The requirement may be any requirement related to at least one of latency, reliability, capacity, speed, and performance, for example.

In the future radio communication systems, it is conceivable that a large number of base stations will be arranged in order to provide cells corresponding to different services or requirements.

However, in a case where a large number of base stations are arranged, also the numbers of connections between base stations, base station facilities, arrangement positions, etc. are increased, and the cost when providing a network may be increased.

Thus, an object of the present disclosure is to provide a terminal and a radio communication method that can provide a network at low cost.

### Solution to Problem

A terminal according to an aspect of the present disclosure includes: a transmission section that transmits a report regarding a specific function among functions of a base station; and a control section that determines whether to execute the specific function or not on the basis of whether an instruction signal is received or not.

### Advantageous Effects of Invention

According to an aspect of the present disclosure, a network can be provided at low cost.

### Brief Description of Drawings

Fig. 1 is a diagram illustrating an example of a current network design.
Fig. 2 is a diagram illustrating an example of a case where base stations are arranged in accordance with services or required conditions.
Fig. 3 is a diagram illustrating an example of a network in a case where Captain UEs are introduced.
Fig. 4 is a diagram illustrating an example of a base station function included in a Captain UE.
Fig. 5 is a diagram illustrating another example of the base station function included in the Captain UE.
Fig. 6 is a diagram illustrating an example of a Captain UE operation start procedure.
Fig. 7 is a diagram illustrating an example of a change of a state report in the Captain UE operation start procedure.
Figs. 8A to 8C are diagrams illustrating examples of connection conditions.
Fig. 9 is a diagram illustrating an example of a schematic configuration of a radio communication system according to an embodiment.
Fig. 10 is a diagram illustrating an example of a configuration of a base station according to the embodiment.
Fig. 11 is a diagram illustrating an example of a configuration of a user terminal according to the embodiment.
Fig. 12 is a diagram illustrating an example of a hardware configuration of the base station and the user terminal according to the embodiment.

### Description of Embodiments

### <Network Design>

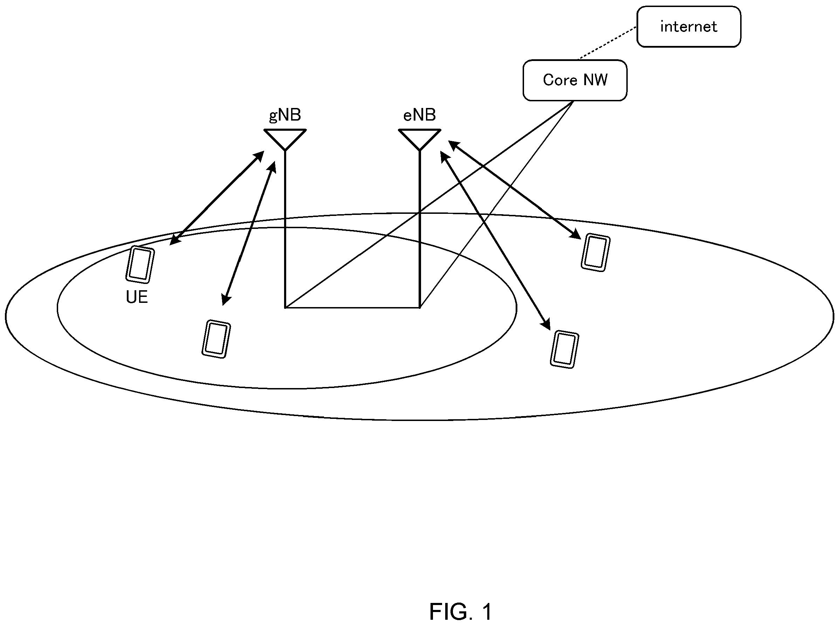

Fig. 1 is a diagram illustrating an example of a current (for example, Rel. 15) network design (NW design). Herein, a case where each of a first base station (LTE eNB) that provides LTE communication and a second base station (NR gNB) that provides NR communication forms a cell and communicates with a terminal (hereinafter, also referred to as a UE) in the cell is illustrated.

The first base station may control communication with the UE by using a predetermined frequency band (for example, at least one of 700 MHz, 800 MHz, 1.5 GHz, 1.8 GHz, 2.1 GHz, and 3.5 GHz). The second base station may control communication with the UE by using another frequency band (for example, at least one of 3.7 GHz, 4.5 GHz, and 28 GHz).

Each base station may be directly (or via another base station) connected to a core network. The core network may include, for example, at least one of evolved packet core (EPC), 5G core network (5GCN), next generation core (NGC), or the like. Further, the core network may be connected to an external network such as the Internet. The UE may be a terminal corresponding to at least one of communication methods such as LTE, LTE-A, and 5G.

A network operator (NW operator) arranges first base stations and second base stations everywhere to provide communications.

In a future radio communication system, it is assumed that services such as machine-type communications (for example, massive Machine Type Communications (mMTC) and Internet of Things (IoT)), which provide multiple simultaneous connections, and Device to Device (D2D) in which terminals directly communicate with each other without the intervention of a base station will be provided.

Further, in a future radio communication system, it is assumed that traffic types (also referred to as service types, communication types, use cases, or the like) of further advancement of the mobile broadband (for example, enhanced Mobile Broadband (eMBB)), high-reliability and low-latency communications (for example, Ultra-Reliable and Low-Latency Communications (URLLC)), and the like will appear. For example, it is required that the URLLC have smaller latency and higher reliability than the eMBB.

Further, in a specific traffic type (for example, URLLC), it is also assumed that the required conditions demanded will vary with provided services (for example, gaming, and X reality (XR, for example, virtual reality (VR), augmented reality (AR), mixed reality (MR), and substitutional reality (SR))).

Further, in a future radio communication system, it is assumed that communication will be performed by using a higher frequency range. For example, a frequency range above 52.6 GHz (FR4) may be used. Further, in a future radio communication system, it may be desired that a NW satisfying a request of the user be provided in response to the request more quickly.

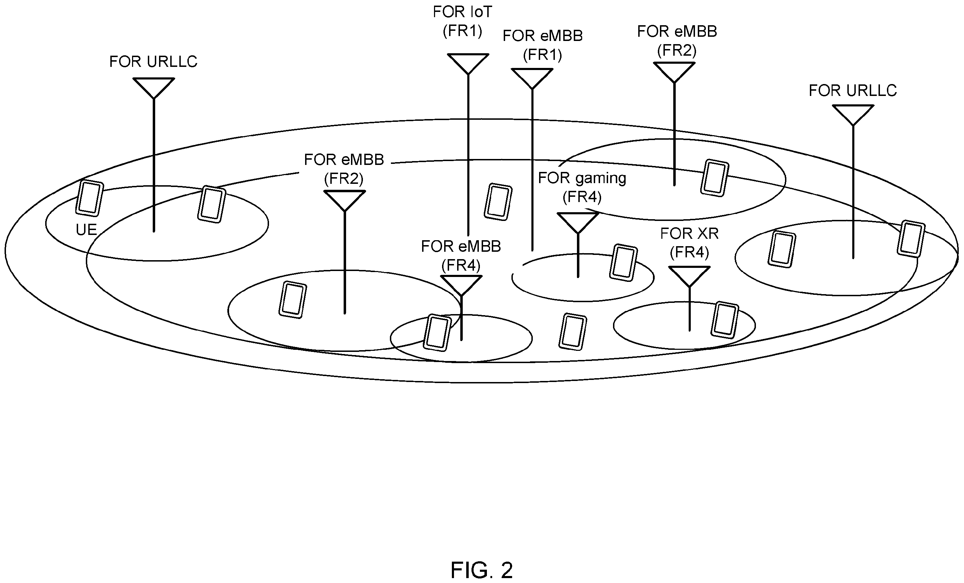

In a case where a current NW design (for example, an arrangement of base stations according to services or communication requests) is used as it is, it is conceivable that a large number of base stations are arranged in order to provide cells corresponding to different services or communication requirements (see Fig. 2).

Fig. 2 is a diagram illustrating an example of a case where base stations are arranged in accordance with different services or communication requests. As illustrated in Fig. 2, in a case where a large number of base stations are arranged, also the numbers of connections between base stations, base station facilities, arrangement positions, etc. are increased, and also the personnel needed for arrangement is increased; thus, the cost when providing a network may be increased.

The present inventors focused on giving a base station function to a specific terminal in order to suppress an increase in the number of base stations arranged, and studied a method or a network design that can provide a network at low cost; thus, have conceived the invention of the present application.

Hereinafter, embodiments according to the present disclosure will be described in detail with reference to the drawings. Configurations described in each of the aspects may be applied individually or in combination. Note that the communication system to which the present embodiment can be applied is not limited. In the present disclosure, transmission/reception may mean at least one of transmission and reception. In the present disclosure, transmission/reception, transmission, reception, and transmission and reception may be replaced with each other.

### (First Aspect)

In a first aspect, a case where a function included in a base station (hereinafter, also referred to as a base station function) is provided to a specific terminal is described.

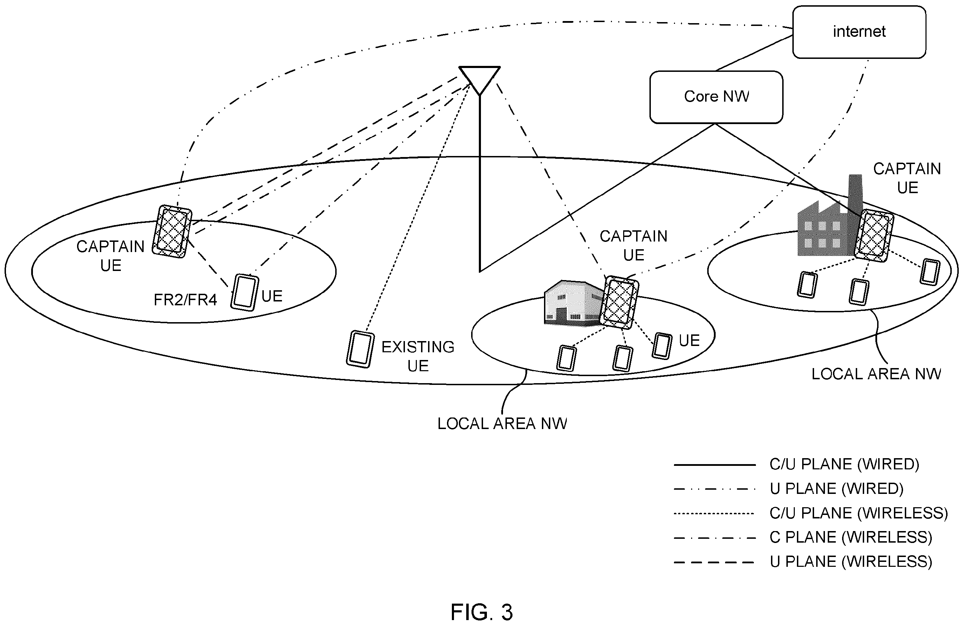

Fig. 3 is a diagram illustrating an example of a case where at least part of the base station functions are provided to a specific terminal. A terminal including a base station function (for example, at least part of the base station functions) may be referred to as a Captain (C)-UE, a Special UE, a Specific UE, or the like. Note that a UE that includes a base station function and is performing the base station function may be referred to as a Captain UE.

On the other hand, a UE not including (not supporting) a base station function (or a UE that is not performing a base station function) may be referred to as another UE, a Normal UE, a Member (M)-UE, a Non-Captain UE, a Non-Special UE, a Non-Specific UE, or the like.

The Captain UE may be a configuration that communicates with the base station similarly to the Normal UE. For example, at least one of user data (U-plane) and a control signal (C-plane) may be transmitted/received wirelessly between the Captain UE and the base station.

Further, the Captain UE may be connected to a core network and an external network (for example, the Internet or the like) by using at least one of a wired system and a wireless system. Further, at least one of user data (the U-plane) and the control signal (the C-plane) may be transmitted/received wirelessly between the Captain UE and the Normal UE. For example, between the Captain UE and the Normal UE, only the U-plane may be transmitted/received wirelessly, or both the U-plane and the C-plane may be transmitted/received wirelessly.

The Captain UE may control whether or not to apply (for example, implement/stop, enable/disable, or activate/deactivate) the base station function on the basis of a notification from the network (for example, the base station). The notification from the network may use at least one of higher layer signaling and downlink control information. Further, the Captain UE may determine the base station function to be applied on the basis of a notification from the network or a predetermined condition.

Note that in a case where a specific condition is satisfied, whether to apply the base station function or not may be controlled even in a case where there is no notification from the network. For example, the specific condition may be that emergency information (for example, of a disaster or the like) be received from other than the network.

Further, the Captain UE may control whether to apply a base station UE or not by means of a timer. A timer control (for example, the start timing, the expiration timing, or the like) may be defined in advance in the specifications, or may be configured from the network (for example, the base station).

The Captain UE may form an area to provide a specific service by using a specific radio resource. The radio resource may be a frequency resource, a time resource, or a combination of a frequency resource and a time resource.

Information regarding the specific radio resource may be defined in advance in the specifications, or may be notified from the network (for example, the base station) to the Captain UE and the Normal UE by higher layer signaling or the like. Alternatively, the Captain UE may notify the Normal UE of information regarding the specific radio resource.

The Normal UE may control the transmission/reception of a specific radio resource or a specific service on the basis of an instruction of the Captain UE. On the other hand, the Normal UE may control the transmission/reception of another radio resource or another service on the basis of an instruction of the base station.

The Captain UE may control at least one of the transmission and reception (hereinafter, referred to as transmission/reception) of the Normal UE. For example, the Captain UE may control at least one of the following Normal UE operations.

Normal UE operation 1: a case where data transmission/reception of the Normal UE is performed wirelessly with the base station via the Captain UE

Normal UE operation 2: a case where data transmission/reception of the Normal UE is performed wirelessly with the base station without the intervention of the Captain UE

Normal UE operation 3: a case where data transmission/reception of the Normal UE is performed by wire via the Captain UE

Normal UE operation 4: a case where direct communication between Normal UEs is performed

Note that the data may be replaced with at least one of UL-SCH, DL-SCH, SL-SCH, PUSCH, PDSCH, and PSSCH.

The Captain UE may receive information regarding the Normal UE that performs control by using the base station function (for example, an identifier or the like of the Normal UE) from the network (for example, the base station). Alternatively, the Captain UE may determine the Normal UE that performs control using the base station function on the basis of the condition of reception of signals or data transmitted from Normal UEs.

### <Normal UE Operation>

In a case where the Normal UE is connected to a Captain UE, the Normal UE may control communication on the basis of an instruction of the Captain UE. On the other hand, in a case where the Normal UE is not connected to the Captain UE, the Normal UE may control communication on the basis of an instruction of the base station.

The Normal UE may receive information regarding the Captain UE (for example, information of the Captain UE to connect to) from the base station by at least one of higher layer signaling and downlink control information. Alternatively, the Normal UE may determine the Captain UE to connect to on the basis of predetermined signals transmitted from Captain UEs. The number of Captain UEs that the Normal UE connects to may be limited to one, or may be plural.

When the Normal UE connected to the Captain UE has received an instruction from the base station, the Normal UE may prioritize the instruction of either one of the Captain UE and the base station, and may ignore (or drop) the other instruction. Which one of the instruction from the Captain UE and the instruction from the base station to prioritize may be defined in advance in the specifications, or may be notified from the network (for example, the base station) to the Normal UE (and the Captain UE).

Alternatively, the Normal UE may determine which one of the instruction from the Captain UE and the instruction from the base station to prioritize on the basis of an indicated information class or information type. The degrees of priority of the information types may be defined in advance in the specifications, or may be notified from the network (for example, the base station) to the Normal UE (and the Captain UE).

Each UE may report whether it includes a base station function or not (or whether it can be a Captain UE or not) to the network (for example, the base station). Further, a UE including a base station function may report the content (for example, the layer, the function level, or the like) of the included base station function. Further, the Normal UE may report, to the network (for example, the base station), whether it supports communication with the Captain UE or not (whether it can perform transmission/reception between the Captain UE and itself or not).

### <Base Station Function>

The base station function included in the Captain UE needs only to be a function regarding the communication control of the Normal UE. For example, the base station function may be at least one of the following.

### [Function of Physical (PHY) Layer]

The Captain UE may perform at least one of the transmission of broadcast information (or system information), the reception of a random access channel, and the transmission of a random access response.

For example, when the Captain UE has received a random access preamble (for example, a PRACH) transmitted from a Normal UE, the Captain UE may control the random access procedure (message 2 and subsequent messages) of the Normal UE. At this time, the Captain UE may control the random access procedure via the base station.

### [Function of MAC Layer]

The Captain UE may perform at least one of the multiplexing (or mapping) of logical channels, HARQ retransmission control, the scheduling of at least one of DL, UL, and SL, and the multiplexing/demultiplexing of data for a plurality of cells (or CCs).

### [Function of RLC Layer]

The Captain UE may perform at least one of data division, data coupling, retransmission control, duplicated data detection, and order-keeping delivery to a higher layer.

### [Function of PDCP Layer]

The Captain UE may perform at least one of encryption, restoration, order-keeping delivery, the removal of duplicated data in handover, and the duplication of a PDCP packet.

### [Function of RRC Layer/SDAP Layer]

The Captain UE may perform at least one of the determination of an RRC parameter, the provision of an RRC parameter, RRC connection management, cell selection, cell reselection, the configuration of higher layer measurement, the handling of UE capability, and the transmission of a paging message.

### (Second Aspect)

In a second aspect, a case where the base station function applied (or supported) by the Captain UE is controlled on the basis of a predetermined condition is described.

The Captain UE may change the supported base station function in accordance with the state (or communication state or communication method) of the Captain UE itself. The state of the Captain UE may be the state of the Captain UE in the transmission/reception of data of the Normal UE; for example, may be the role or operating method performed by the Captain UE.

In a case where the state of the Captain UE is a first state, the Captain UE may support a first base station function, and in a case where the state of the Captain UE is a second state, the Captain UE may support a second base station function.

### <First Base Station Function>

In a case where the transmission/reception of data of the Normal UE is performed wirelessly with the base station via the Captain UE, the Captain UE may support the first base station function. Further, in a case where the transmission/reception of data of the Normal UE is performed wirelessly with the base station without the intervention of the Captain UE, the Captain UE may support the first base station function.

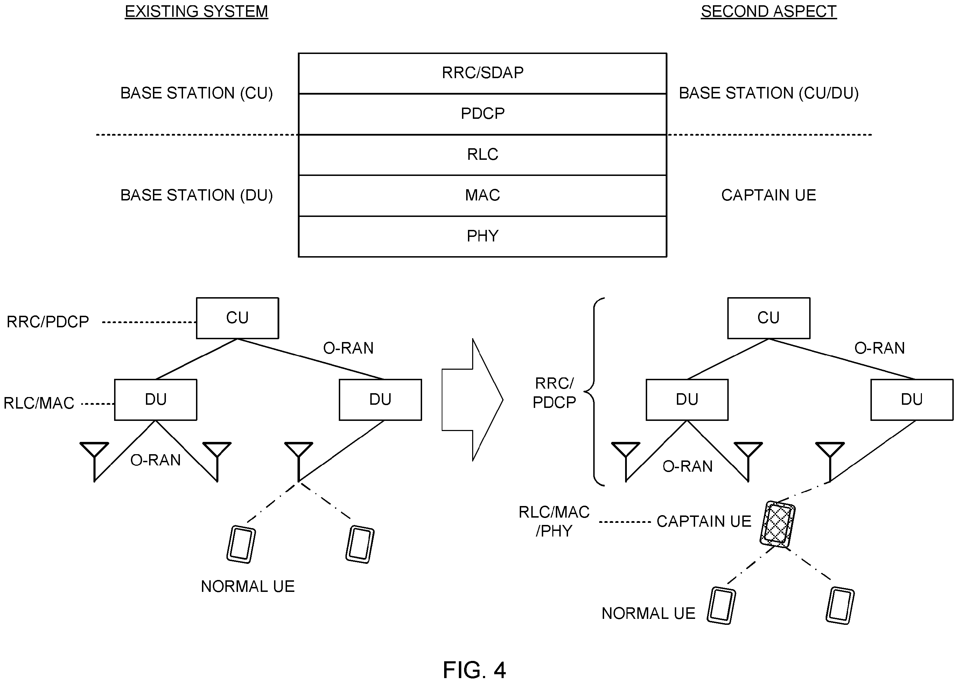

Fig. 4 illustrates an example of the base station function in a case where the transmission/reception of data of the Normal UE is performed wirelessly with the base station via the Captain UE. In an existing system, the Normal UE is connected to the base station, whereas in the second aspect, the Normal UE may be connected wirelessly to the base station via the Captain UE.

The base station may be connected to a distribution unit (DU), and the distribution unite may be connected to a central unit (CU). Herein, a case where the central unit and the distribution unit are connected by Open RAN (O-RAN) is illustrated; but the present invention is not limited thereto.

Fig. 4 illustrates a case where the first base station function is a function (or part of the functions) for controlling the RLC layer, the MAC layer, and the physical layer. In this case, a configuration in which the base station performs control regarding the RRC layer, the Service Data Adaptation Protocol (SDAP) layer, and the Packet Data Convergence Protocol (PDCP) layer and the Captain UE performs control (or partial control) regarding the Radio Link Control (RLC) layer, the MAC layer, and the physical layer may be employed.

For example, in a case where the scheduling (for example, resource allocation) of the Normal UE is performed, information regarding a radio resource set (or one or more radio resource candidates) is notified or configured from the base station to the Normal UE. Further, information regarding a specific radio resource included in a radio resource set may be notified from the Captain UE to the Normal UE. That is, the Normal UE may control transmission/reception by using information notified from the base station (for example, higher layer signaling or the like) and information notified from the Captain UE (for example, downlink control information).

Thus, part of the schedule can be controlled by using a Captain UE having a base station function, and therefore communication can be controlled flexibly. As a result, an increase in the number of base stations arranged can be suppressed, and a network can be provided at low cost.

Note that although Fig. 4 illustrates a case where, as the first base station function, the function of a distribution unit (DU) in an existing system (for example, Rel. 15) is performed by the Captain UE, the present invention is not limited thereto.

### <Second Base Station Function>

In a case where the transmission/reception of data of the Normal UE is performed by wire via the Captain UE, the Captain UE may support the second base station function. Alternatively, in a case where direct communication between Normal UEs is performed, the Captain UE may support the second base station function.

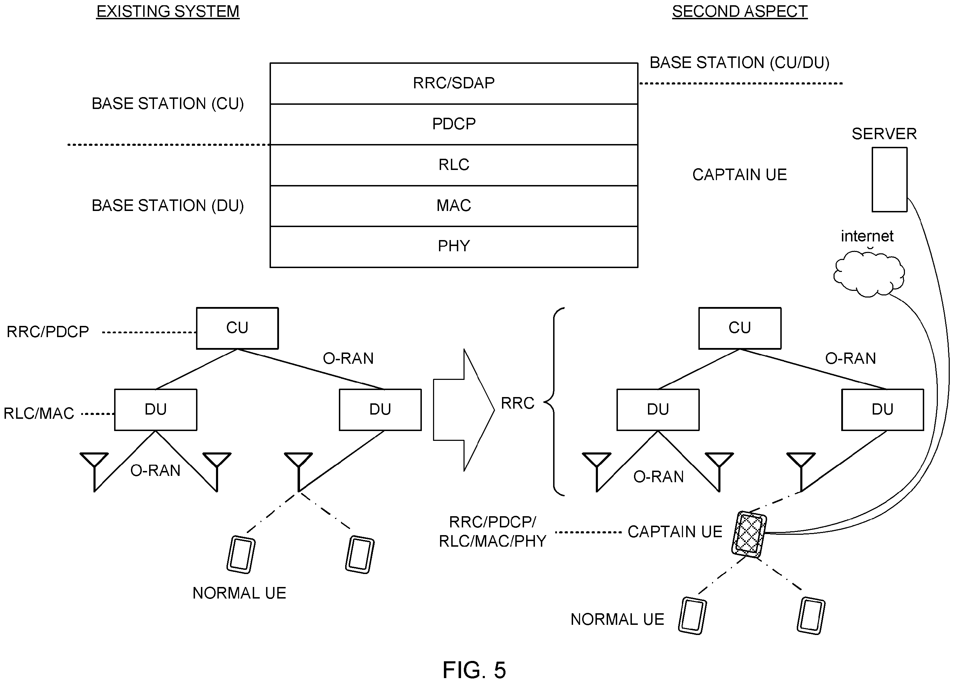

Fig. 5 illustrates an example of the base station function in a case where the transmission/reception of data of the Normal UE is performed by wire via the Captain UE. Herein, a case where the transmission/reception of data of the Normal UE is performed with an external network (for example, the Internet) or a server by wire via the Captain UE is illustrated.

In an existing system, the Normal UE is connected to the base station, whereas in the second aspect, the Normal UE may be preferentially connected to the Internet or a server via the Captain UE. The base station may be connected to a distribution unit (DU), and the distribution unit may be connected to a central unit (CU). Herein, a case where the central unit and the distribution unit are connected by Open RAN (O-RAN) is illustrated; but the present invention is not limited thereto.

Fig. 5 illustrates a case where the second base station function is a function (or part of the functions) for controlling part of the RRC layer and the SDAP layer, the PDCP layer, the RLC layer, the MAC layer, and the physical layer. In this case, a configuration in which the base station performs control regarding part of the RRC layer and the SDAP layer and the Captain UE performs control (or partial control) regarding the PDCP layer, the RLC layer, the MAC layer, and the physical layer may be employed.

For example, in a case where the scheduling (for example, resource allocation) of the Normal UE is performed, both information regarding a radio resource set (or one or more radio resource candidates) and information regarding a specific radio resource included in the radio resource set may be notified from the Captain UE to the Normal UE. That is, the Normal UE may control transmission/reception by using information notified from the Captain UE (for example, higher layer signaling and downlink control information).

Thus, the schedule can be controlled by using a Captain UE having a base station function, and therefore communication can be controlled flexibly. As a result, an increase in the number of base stations arranged can be suppressed, and a network can be provided at low cost.

Note that although Fig. 5 illustrates a case where, as the first base station function, the functions of a central unit (CU) and a distribution unit (DU) in an existing system (for example, Rel. 15) are performed by the Captain UE, the present invention is not limited thereto.

Alternatively, the base station function applied or supported by the Captain UE may be specified from the network (or the base station). In this case, the base station may notify the Normal UE of at least one of information regarding the Captain UE to connect to, information regarding the base station function supported by the Captain UE, and the activation and deactivation of the connection with the Captain UE.

### (Third Aspect)

In a third aspect, a procedure for starting a Captain UE operation is described.

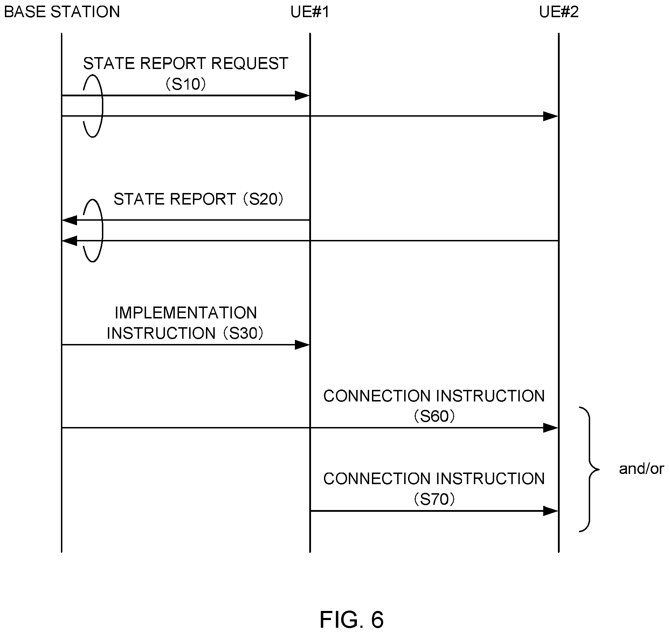

For example, as illustrated in Fig. 6, a base station (for example, gNB) and UEs #1 and #2 may perform a start procedure (a Captain UE operation start procedure) for starting a Captain UE operation.

The UE (UE #1 and UE #2) may receive an instruction (request, report request, or state report request) of a report regarding the Captain UE operation (a base station function, or a specific function among the functions of the base station) from at least one of the base station and another UE (a Captain UE or a Normal UE) (S10). An instruction of a report regarding the Captain UE operation, a signal (an invitation signal) for inviting the implementation of the Captain UE operation, and an instruction (an element report instruction) of a report of an information element (capability information, a function, a parameter, or the like) regarding the Captain UE operation may be replaced with each other.

The UE (UEs #1 and #2, or UE #1) may transmit a report (state report) regarding the Captain UE operation (S20). A report regarding the Captain UE operation, a signal (a candidacy signal) for standing as a candidate for implementation of the Captain UE operation, and an information element (capability information, a function, a parameter, an element report, or the like) regarding the Captain UE operation may be replaced with each other. The UE that transmits a report regarding the Captain UE operation may be a UE that has received an instruction regarding the Captain UE operation, a UE that stands as a candidate for implementation of the Captain UE operation, or a UE that can perform the Captain UE operation. A plurality of UEs may transmit reports regarding the Captain UE operation at different timings. The UE may transmit a state report in accordance with a state report request, or may transmit a state report voluntarily.

After S20, the UE (UE #1) may receive an instruction to implement the Captain UE operation (an implementation instruction, an instruction signal, a Captain UE instruction signal, or the like) from the base station (S30). This UE may be a UE that has transmitted a report regarding the Captain UE operation, a UE selected by the base station among the UEs that have transmitted reports regarding the Captain UE operation, or a UE that can perform the Captain UE operation.

After S30, a UE (UE #2) satisfying a connection condition may connect to the Captain UE. The connection condition may be at least one of receiving, from the base station, an instruction to connect to the Captain UE (a connection instruction, a Captain UE connection instruction, a connection instruction signal, or the like) (S60) and receiving, from the Captain UE, an instruction to connect to the Captain UE (a connection instruction, a Captain UE connection instruction, a connection instruction signal, or the like) (S70). Details of the connection condition are described later.

### <State Report Request Regarding Captain UE Operation>

The state report request regarding the Captain UE operation (S10) may be associated with at least one of the following pieces of information, or may include at least one of the following pieces of information.
▪A privilege (of the Captain UE) in a case where the UE operates as a Captain UE (for example, a reward, preferential control, or a special configuration for the Captain UE, or a benefit, a right, an advantage, or treatment of the Captain UE). The privilege may be that the Captain UE is prioritized over the Normal UE in specific control performed by the base station, or may be that the degree of priority of the Captain UE for specific control is higher than the degree of priority of the Normal UE. The privilege may be at least one of channel access preferential control, beam management preferential control, transmission power preferential control, and scheduling preferential control. The channel access preferential control may be that the Captain UE is prioritized over the Normal UE when the Captain UE accesses a cell (for example, an unlicensed component carrier (CC)) in accordance with a result (for example, idle) of sensing (for example, listen before talk (LBT)) of a channel (for example, licensed assisted access (LAA)). The beam management preferential control may be that the beam (for example, the base station beam) for the Captain UE is prioritized over that for the Normal UE. The transmission power preferential control may be that the transmission power control (TPC) of the Captain UE is preferentially allocated over that of the Normal UE. The scheduling preferential control may be that the scheduling of the Captain UE is prioritized over that of the Normal UE.
▪At least one requirement of the base station function and a configuration (parameter) regarding the base station function in a case where the UE operates as a Captain UE.
▪A requirement of a radio resource (for example, at least one of a time resource and a frequency resource, the size of a radio resource, or the like) in a case where the UE operates as a Captain UE.
▪A requirement of traffic accommodation capacity (for example, at least one of the coverage range, the number of accommodated UEs, the amount of accommodated traffic, and the accommodated service type) in a case where the UE operates as a Captain UE.
▪At least one requirement of the battery capacity and the run time of the UE.
▪A requirement of location information (for example, at least one of the latitude, the longitude, the altitude, the base station beam ID, the distance (Path-loss) from the base station, and the distance (Path-loss) between the self-UE and another UE) of the UE (for example, at least one of the self-UE and another UE, a Normal UE that the UE can connect to in a case where the UE operates as a Captain UE, or the like). The UE may receive location information of another UE, or may share location information with another UE.
▪A requirement of a measurement result by the UE (at least one of a received signal strength indicator (RSSI), reference signal received power (RSRP), reference signal received quality (RSRQ), a signal-to-noise and interference ratio, a signal-to-interference and noise ratio (SINR), a UE-ID for transmitting a measured (received) signal, and the number of UEs that transmit measured (received) signals).
▪At least one requirement of the service type (for example, eMBB, URLLC, or the like) required by a peripheral UE (for example, a Normal UE), a UE (UE-ID) of a communication partner, and the range (location or UE-ID) of a UE of a communication partner.
▪A requirement of the interference level with another UE (for example, another Captain UE, a Normal UE, or the like).
▪At least one requirement of the capability (capability information) and the base station function level of the Captain UE. At least one of the capability and the base station function level may indicate a base station function (for example, a function of at least one of the physical layer, the MAC layer, the RLC layer, the PDCP layer, the RRC layer, the SDAP layer, the CU, and the DU mentioned above).
▪At least one requirement of the mobility (for example, mobility level) of the UE and the type of the UE (the UE type or the UE category). For example, at least one of the mobility level, the UE type, and the UE category may indicate at least one of normal (for example, a UE, a mobile terminal, or the like), transport (for example, a public transportation facility, a train, a bus, or the like), and an unmanned moving object (for example, a drone, a robot, or the like), alternatively may indicate whether it moves or not, or may indicate a moving speed.

The requirement may be a requirement of the Captain UE operation. The requirement may be represented by at least one of a value, a range, a lower limit, and an upper limit.

The information reported by the state report may correspond to the information requested by the state report request.

By using such a state report request, the UE can appropriately transmit a report regarding the Captain UE operation in accordance with the state report request.

### <State Report Regarding Captain UE Operation>

The state report regarding the Captain UE operation (S20) may be associated with at least one of the following pieces of information, or may include at least one of the following pieces of information. At least one of the following pieces of information may correspond to the information indicated by the state report request.
▪A privilege (of the Captain UE) in a case where the UE operates as a Captain UE (for example, a reward, preferential control, or a special configuration for the Captain UE, or a benefit, a right, an advantage, or treatment of the Captain UE).
▪At least one of the base station function and a configuration (parameter) regarding the base station function in a case where the UE operates as a Captain UE.
▪A radio resource (for example, at least one of a time resource and a frequency resource, the size of a radio resource, or the like) in a case where the UE operates as a Captain UE.
▪Traffic accommodation capacity (for example, at least one of the coverage range, the number of accommodated UEs, the amount of accommodated traffic, and the accommodated service type) in a case where the UE operates as a Captain UE.
▪At least one of the battery capacity and the run time of the UE.
▪Location information (for example, at least one of the latitude, the longitude, the altitude, the base station beam ID, the distance (Path-loss) from the base station, and the distance (Path-loss) between the self-UE and another UE) of the UE (for example, at least one of the self-UE and another UE, a Normal UE that the UE can connect to in a case where the UE operates as a Captain UE, or the like).
▪A measurement result by the UE (at least one of RSSI, RSRP, RSRQ, SINR, a UE-ID for transmitting a measured (received) signal, and the number of UEs that transmit measured (received) signals).
▪At least one of the service type (for example, eMBB, URLLC, or the like) required by a peripheral UE (for example, a Normal UE), a UE (UE-ID) of a communication partner, and the range (location or UE-ID) of a UE of a communication partner.
▪The interference level (for example, a measurement result) with another UE (for example, another Captain UE, a Normal UE, or the like).
▪At least one of the capability and the base station function level of the Captain UE.
▪At least one of the mobility of the UE and the type of the UE.

The information included in a state report from a UE including a base station function and the information included in a state report from a UE not including a base station function may be different from each other.

The UE may transmit a state report on the basis of a configuration or an instruction (state report request) from at least one of the base station and another UE (a Captain UE or a Normal UE), or may transmit a state report voluntarily.

The UE may transmit a state report to at least one of the base station and another UE (a Captain UE or a Normal UE).

By using such a state report, the UE can appropriately transmit information regarding the determination of the Captain UE.

### <Implementation Instruction>

The implementation instruction for the Captain UE operation (S30) may be associated with at least one of the following pieces of information, or may include at least one of the following pieces of information. At least one of the following pieces of information may correspond to the state report request or the information indicated by the state report.
▪A reward (at least one of the channel access preferential control, the beam management preferential control, the transmission power preferential control, and the scheduling preferential control) in a case where the UE operates as a Captain UE.
▪At least one of the base station function and a configuration (parameter) regarding the base station function in a case where the UE operates as a Captain UE.
▪A radio resource (for example, at least one of a time resource and a frequency resource) needed in a case where the UE operates as a Captain UE.
▪Accommodation capacity (for example, at least one of the coverage range, the number of accommodated UEs, and the accommodated traffic).

The information indicated by the implementation instruction may correspond to at least one of the information reported by the state report and the information requested by the state report request.

In a case where the implementation instruction satisfies an implementation condition, the UE may assume (recognize or determine) that the UE is instructed to implement the Captain UE operation (the UE may implement (execute) the Captain UE operation).

The implementation condition may be at least one of the following.
▪The information indicated by the implementation instruction coincide with the information reported by the state report.
▪The information indicated by the implementation instruction be more advantageous and/or more beneficial to the terminal than the information reported by the state report.
▪The implementation instruction indicates performing the Captain UE operation on the basis of the state report.
▪The UE receive the implementation instruction.

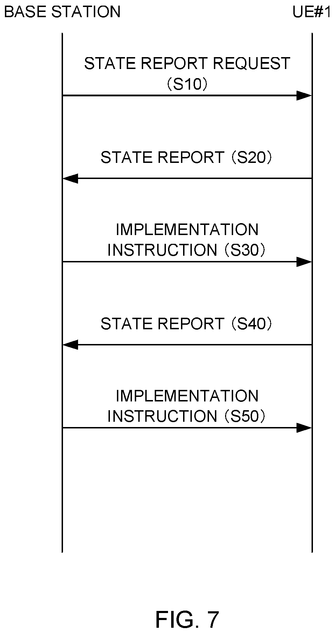

The UE may change the information of the state report on the basis of the information indicated by the implementation instruction and the information indicated by the state report, and may transmit the changed state report. For example, in a case where an implementation condition is that the information indicated by the implementation instruction coincides with the information reported by the state report, the Captain UE operation may be started by an operation like that illustrated in Fig. 7. UE #1 transmits a state report (S20) in response to the reception of a state report request (S10), and receives an implementation instruction (S30). In a case where the information of the implementation instruction does not coincide with the information of the state report, UE #1 considers that the negotiation has failed, changes the information of the state report, transmits the changed state report (S40), and receives an implementation instruction (S50). In a case where the information of the implementation instruction coincides with the information of the state report, UE #1 considers that the negotiation has succeeded, and performs the Captain UE operation. After the negotiation succeeds (S50), at least one of the above S60 and S70 may be performed.

The Captain UE operation start procedure may repeat a state report and an implementation instruction until the negotiation succeeds for at least one UE, alternatively until the number of transmission times of implementation instructions becomes a prescribed or set number, or until the time of the Captain UE operation start procedure becomes a prescribed or set period of time.

By using such an implementation instruction, the UE can appropriately determine whether to perform the Captain UE operation or not.

### <Connection to Captain UE>

In a case where a UE that does not perform the Captain UE operation (a UE not having a base station function, a UE that does not receive an implementation instruction, a UE not satisfying an implementation condition, or the like) satisfies a connection condition, the UE may connect to the Captain UE.

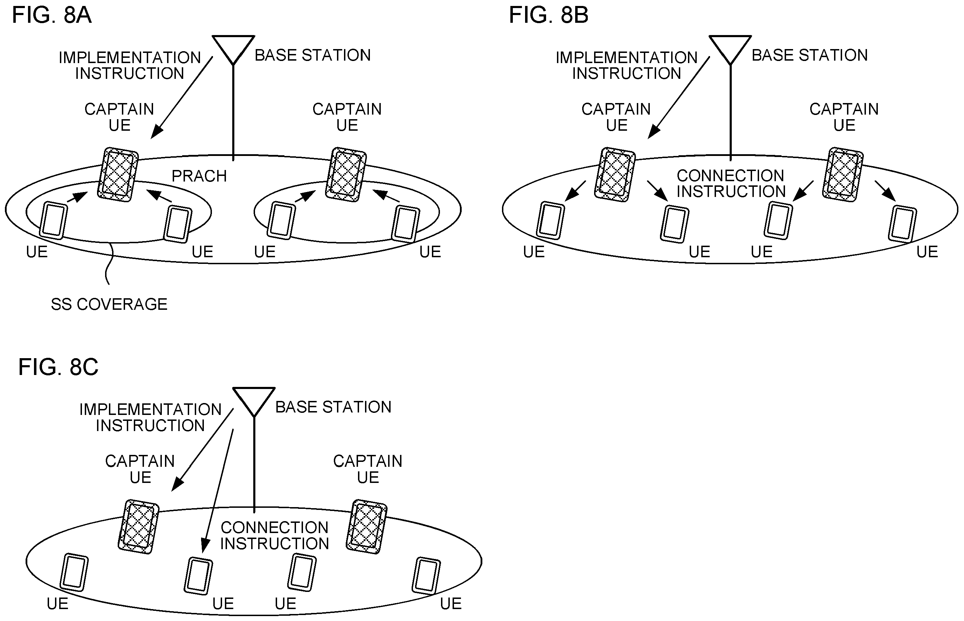

The connection condition may be that at least one of the following conditions be satisfied.
▪The UE succeed in receiving a connection instruction (S60) from the Captain UE. For example, the connection instruction may be Msg. 4 (a contention resolution signal), or may be a synchronization signal (SS)/physical broadcast channel (PBCH) block. For example, as illustrated in Fig. 8A, the UE may connect to the Captain UE on the basis of the initial access. The Captain UE may transmit an SS/PBCH block. The resource of the SS/PBCH block from the Captain UE may be different from the resource of the SS/PBCH block from the base station. A Normal UE within the coverage of the SS/PBCH block (the SS coverage) (a Normal UE that has detected the SS/PBCH block) may perform an initial access procedure by transmitting a physical random access channel (PRACH) on the basis of the SS/PBCH block. In a case where the Normal UE has succeeded in receiving Msg. 4 from the Captain UE, the Normal UE may connect to the Captain UE.
▪The UE receive, from the Captain UE, a connection instruction (S60) instructing connection to the Captain UE. This connection instruction may be higher layer signaling (an RRC message or the like). For example, as illustrated in Fig. 8B, the Normal UE may connect to the Captain UE on the basis of individual signaling (a connection instruction) from the Captain UE.
▪The UE receive, from the base station, a connection instruction (S70) instructing connection to the Captain UE. This connection instruction may be higher layer signaling (an RRC message or the like). For example, as illustrated in Fig. 8C, the Normal UE may connect to the Captain UE on the basis of a connection instruction from the base station based on handover or secondary cell (SCell) activation.

By using such a connection condition, the Normal UE can appropriately connect to the Captain UE.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

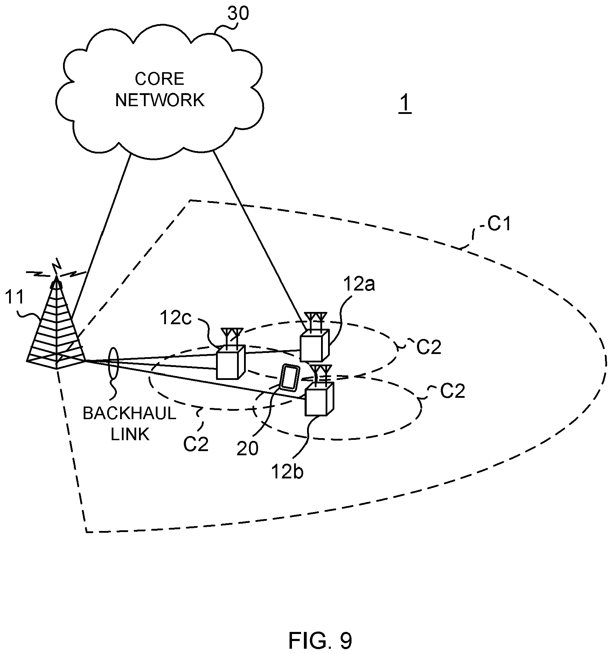

Fig. 9 is a diagram illustrating an example of a schematic configuration of the radio communication system according to the embodiment. A radio communication system 1 may be a system that implements communication using long term evolution (LTE), 5th generation mobile communication system New Radio (5G NR), and the like drafted as the specification by third generation partnership project (3GPP).

Note that base stations 11, and 12a to 12c may be operated by different companies. Alternatively, the base station 11 and the base station 12a may be operated by the same company, and the base stations 12b and 12c may be operated by different companies. Further, a licensed NW may be operated by base station 11, and a local NW may be operated by each of base stations 12a to 12c.

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10*"*, unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal corresponding to at least one of communication methods such as LTE, LTE-A, and 5G. Further, the user terminal 20 may function as a Captain UE. In such a case, the user terminal serving as a Captain UE may control the communication of another user terminal by applying a specific base station function.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One search space may correspond to a PDCCH candidate corresponding to one or more aggregation levels. One or more search spaces may be referred to as a search space set. Note that the terms "search spacer"*,* "search space set"*,* "search space configuration", "search space set configuration*",* "CORESET", "CORESET configuration*",* and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

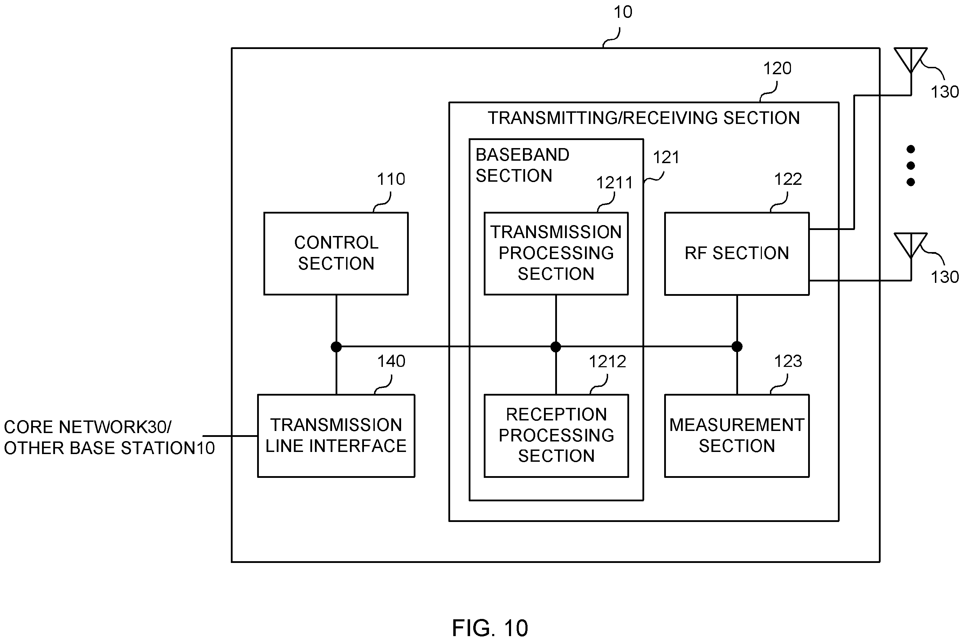

Fig. 10 is a diagram illustrating an example of a configuration of a base station according to the embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided. Further, a UE including a base station function (a Captain UE) may include at least part of the configuration of the base station illustrated below.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section, or may include a transmission section and a receiving section. The transmission section may include the transmission processing section 1211 and the RF section 122. The receiving section may include the reception processing section 1212, the RF section 122, and the measurement section 123.

The transmission/reception antenna 130 can include an antenna, which is described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam (Tx beam) or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a base band signal.

The transmitting/receiving section 120 (RF section 122) may perform modulation to a radio frequency band, filtering processing, amplification, and the like on the base band signal, and may transmit a signal in the radio frequency band via the transmission/reception antenna 130.

Meanwhile, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmission section and the receiving section of the base station 10 in the present disclosure may include at least one of the transmitting/receiving section 120, the transmission/reception antenna 130, and the transmission line interface 140.

Note that the transmitting/receiving section 120 performs at least one of the reception of a signal transmitted from a UE having a base station function (a Captain UE) and the transmission of a signal to a Captain UE.

For a UE having a base station function (a Captain UE), the control section 110 may control the activation or deactivation of the base station function.

### (User Terminal)

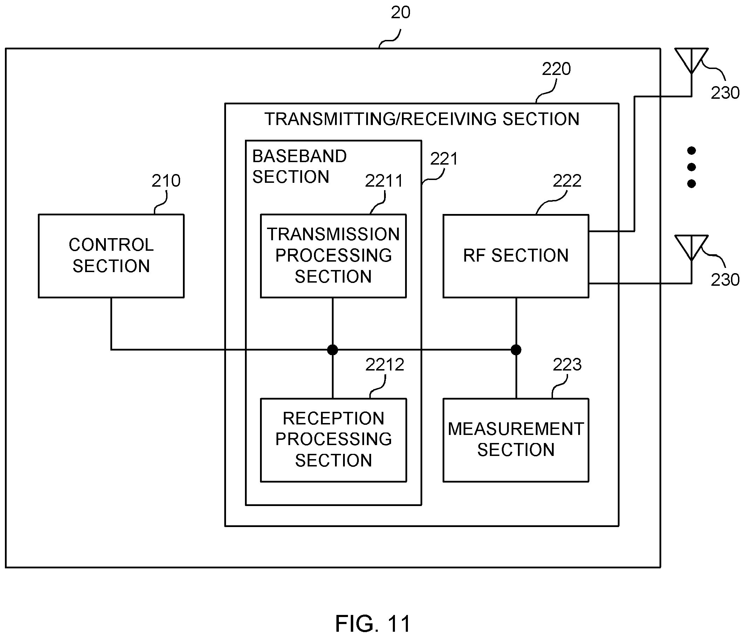

Fig. 11 is a diagram illustrating an example of a configuration of user terminal according to the embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided. Further, a UE including a base station function (a Captain UE) may include at least part of the configuration of the base station described above.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a base band circuit, a filter, a phase shifter, a measurement circuit, a transmission/reception circuit, and the like, which are described based on common recognition in the technical field related to the present disclosure.

The transmitting/receiving section 220 may be configured as an integrated transmitting/receiving section, or may include a transmission section and a receiving section. The transmission section may include the transmission processing section 2211 and the RF section 222. The receiving section may include the reception processing section 2212, the RF section 222, and the measurement section 223.

The transmission/reception antenna 230 can include an antenna, which is described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam or a reception beam using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a base band signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the above-described transmission processing in order to transmit the channel using a DFT-s-OFDM waveform, and if not, the DFT processing does not have to be performed as the transmission processing.

The transmitting/receiving section 220 (RF section 222) may perform modulation to a radio frequency band, filtering processing, amplification, and the like on the base band signal, and may transmit a signal in the radio frequency band via the transmission/reception antenna 230.

Meanwhile, the transmitting/receiving section 220 (RF section 222) may perform amplification, filtering processing, demodulation to a base band signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may include at least one of the transmitting/receiving section 220 and the transmission/reception antenna 230.

The transmitting/receiving section 220 may transmit a report (for example, a state report) regarding a specific function among the functions of the base station (for example, the base station functions). The control section 210 may determine whether to execute the specific function or not on the basis of whether or not an instruction signal (for example, an implementation instruction) is received (for example, the implementation instruction satisfies an implementation condition).

The report may indicate at least one of a privilege of the terminal in a case where it executes the specific function, the level of the specific function, the layer of the specific function, the configuration of the specific function, a radio resource used for the specific function, the traffic accommodation capacity of the specific function, the battery capacity of the terminal, the run time of the terminal, location information of at least one terminal, a measurement result, the service type of the specific function, capability information of the terminal, the mobility of the terminal, and the type of the terminal.

The control section 210 may change the report on the basis of information indicated by the instruction signal and information indicated by the report, and the transmitting/receiving section 220 may transmit the changed report.

The transmitting/receiving section 220 may transmit the report in response to the reception of a request of the report (for example, a state report request).

When receiving, from another terminal that executes the specific function or the base station, a signal (for example, a connection instruction) for connection to the other terminal, the control section 210 may establish connection to the other terminal.

### (Hardware Configuration)

Note that the block diagrams that have been used to describe the above embodiments illustrate blocks in functional units. These functional blocks (components) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional blocks may be implemented by combining software with the above-described single apparatus or the above-described plurality of apparatuses.

Here, the function includes, but is not limited to, determining, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmission section (transmitting unit), a transmitter, and the like. In any case, as described above, the implementation method is not particularly limited.

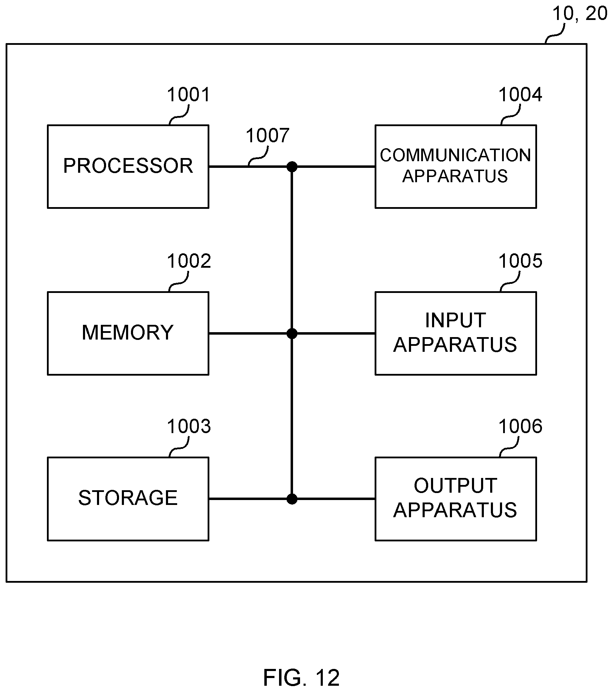

For example, the base station, the user terminal, or the like according to one embodiment of the present disclosure may function as a computer that executes the processing of the radio communication method in the present disclosure. Fig. 12 is a diagram illustrating an example of a hardware configuration of the base station and the user terminal according to the embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented by one or more chips.

Each of functions of the base station 10 and the user terminal 20 is, for example, implemented by causing predetermined software (program) to be read on hardware such as the processor 1001 or the memory 1002 to thereby cause the processor 1001 to perform operation, control communication via the communication apparatus 1004, and control at least one of reading and writing of data from or in the memory 1002 and the storage 1003.

The processor 1001 may control the entire computer by operating, for example, an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 and the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as secondary storage apparatus.

The communication apparatus 1004 is hardware (transmitting/receiving device) for performing inter-computer communication via at least one of a wired network and a wireless network, and for example, is referred to as network device, network controller, network card, communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by the transmission section 120a (220a) and the receiving section 120b (220b).

The input apparatus 1005 is an input device that receives input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be integrated with each other (for example, a touch panel).

Further, these apparatuses such as the processor 1001 and the memory 1002 are connected to each other by the bus 1007 to communicate information. The bus 1007 may be configured by using a single bus, or may be configured by using a different bus for each apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission and reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, the slot may be a time unit based on the numerology.

The slot may include a plurality of mini slots. Each mini slot may include one or more symbols in the time domain. Further, the mini slot may be referred to as a sub slot. Each mini slot may include fewer symbols than the slot. A PDSCH (or PUSCH) transmitted in a time unit larger than the mini slot may be referred to as PDSCH (PUSCH) mapping type A. A PDSCH (or PUSCH) transmitted using the mini slot may be referred to as PDSCH (PUSCH) mapping type B.

The radio frame, the subframe, the slot, the mini slot, and the symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe and the TTI may be a subframe (1 ms) in the existing LTE, may be a period shorter than 1 ms (for example, one to thirteen symbols), or may be a period longer than 1 ms. Note that the unit to represent the TTI may be referred to as a slot, a mini slot and the like, instead of a subframe.

Here, the TTI refers to the minimum time unit of scheduling in radio communication, for example. For example, in the LTE system, a base station performs scheduling to allocate radio resources (frequency bandwidth, transmission power, and the like that can be used in each user terminal) to each user terminal in TTI units. Note that the definition of the TTI is not limited thereto.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that the long TTI (for example, the usual TTI, subframe, or the like) may be replaced with a TTI having a time duration exceeding 1 ms, and the short TTI (for example, the shortened TTI or the like) may be replaced with a TTI having a TTI length less than the TTI length of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined on the basis of the numerology.

Also, the RB may include one or more symbols in the time domain, and may be one slot, one mini slot, one subframe, or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. The PRB may be defined in a given BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not need to be assumed to transmit or receive a predetermined signal/channel outside the active BWP. Note that "cell", "carrier", and the like in the present disclosure may be replaced with "BWP".

Note that structures of the radio frame, subframe, slot, mini slot, symbol, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, information, a parameter, or the like described in the present disclosure may be represented in absolute values, represented in relative values with respect to predetermined values, or represented by using other corresponding information. For example, a radio resource may be specified by a predetermined index.

Names used for the parameters and the like in the present disclosure are not restrictive names in any respect. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols, chips, and the like all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals, and the like may be input and output via a plurality of network nodes.

The information, signals, and the like that are input and output may be stored in a specific location (for example, in a memory), or may be managed in a control table. The information, signals, and the like to be input and output can be overwritten, updated, or appended. The output information, signals, and the like may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Further, notification of predetermined information (for example, notification of "being X") is not limited to explicit notification but may be performed implicitly (for example, by not performing notification of the predetermined information or by performing notification of another piece of information).

Judging may be made in values represented by one bit (0 or 1), may be made in Boolean values that represent true or false, or may be made by comparing numerical values (for example, comparison with a predetermined value).

Regardless of whether or not being referred to as software, firmware, middleware, a microcode, a hardware description language, or other names, software should be widely interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, the software, instruction, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station and a base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmitting apparatus, a receiving apparatus, a radio communication apparatus, and the like. Note that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, but are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as receiving (for example, receiving of information), transmitting (for example, transmitting of information), inputting, outputting, accessing (for example, accessing data in a memory), and the like.

Further, "determining" may be regarded as resolving, selecting, choosing, establishing, comparing, and the like. That is, "determining" may be regarded as a given operation.

Furthermore, "determining" may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other". Note that the phrase may mean that "A and B are different from C". Terms such as "leave", "coupled", or the like may also be interpreted in the same manner as "different".

In a case where terms such as "include", "including", or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a transmission section that transmits a report regarding a specific function among functions of a base station; and
a control section that determines whether to execute the specific function or not on the basis of whether an instruction signal is received or not.

2. The terminal according to claim 1, wherein the report indicates at least one of a privilege of the terminal in a case where it executes the specific function, a level of the specific function, a layer of the specific function, a configuration of the specific function, a radio resource used for the specific function, traffic accommodation capacity of the specific function, battery capacity of the terminal, run time of the terminal, location information of at least one terminal, a measurement result, a service type of the specific function, capability information of the terminal, mobility of the terminal, and a type of the terminal.

3. The terminal according to claim 1 or 2, wherein the control section changes the report on the basis of information indicated by the instruction signal and information indicated by the report, and the transmission section transmits the changed report.

4. The terminal according to any one of claims 1 to 3, wherein the transmission section transmits the report in response to reception of a request of the report.

5. The terminal according to any one of claims 1 to 4, wherein when receiving, from another terminal that executes the specific function or a base station, a signal for connection to the other terminal, the control section establishes connection to the other terminal.

6. A radio communication method for a terminal, the method comprising:
a step of transmitting a report regarding a specific function among functions of a base station; and
a step of determining whether to execute the specific function or not on the basis of whether an instruction signal is received or not.
